# EUROPEAN PATENT APPLICATION

(11) **EP 3 026 260 A1**
(43) Date of publication of application: **01.06.2016**
(21) Application number: 15195885.7
(22) Date of filing: 23.11.2015
(51) Int. Cl.: F03D 1/06, B29C 70/52, B32B 5/08, B29D 99/00, B29C 43/18

(54) **METHODS OF MANUFACTURING ROTOR BLADE COMPONENTS FOR A WIND TURBINE**

(30) Priority: 25.11.2014 US 201414552517
(71) Applicant: General Electric Company, Schenectady, NY 12345 (US)
(72) Inventor: CARUSO, Christopher Daniel, Greenville, SC South Carolina 29615 (US); YARBROUGH, Aaron A., Greenville, NY New York 29615 (US); GEIGER, Shannon B., Greenville, SC South Carolina 29615 (US)
(74) Representative: Bedford, Grant Richard

(57) **Abstract**

Methods 100 of manufacturing rotor blade components for a wind turbine 10 using pre-cured, prefabricated plates constructed of multiple fiber materials are disclosed. In one aspect of the present disclosure, the method 100 includes providing a plurality of pultruded members 40. Each of the pultruded members 40 includes, at least, first and second fiber materials 46,48, wherein the first and second fiber materials 46,48 include at least one of different sizes or different types of fiber materials. Another step includes arranging the plurality of pultruded members 40 into one or more layers 38. A further step includes joining the layers 38 of pultruded members 40 together to form the rotor blade component.

## Description

The present subject matter relates generally to rotor blades of a wind turbine and, more particularly, to methods for manufacturing rotor blade components for a wind turbine.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

Wind turbine rotor blades generally include a body shell formed by two shell halves of a composite laminate material. The shell halves are generally manufactured using molding processes and then coupled together along the corresponding edges of the rotor blade. In general, the body shell is relatively lightweight and has structural properties (e.g., stiffness, buckling resistance and strength) which are not configured to withstand the bending moments and other loads exerted on the rotor blade during operation. In addition, wind turbine blades are becoming increasingly longer in order to produce more power. As a result, the blades must be stiffer and thus heavier so as to mitigate loads on the rotor.

To increase the stiffness, buckling resistance and strength of the rotor blade, the body shell is typically reinforced using one or more structural components (e.g. opposing spar caps with a shear web configured therebetween) that engage the inner surfaces of the shell halves. The spar caps may be constructed of various materials, including but not limited to glass fiber laminate composites and/or carbon fiber laminate composites. Such materials, however, can be difficult to control, defect prone, and/or highly labor intensive due to handling of the dry fabrics and the challenges of infusing large laminated structures.

As such, additional spar caps may also be constructed of pre-fabricated, pre-cured (i.e. pultruded) composites that can be produced in thicker sections, and are typically less susceptible to defects. As used herein, the terms "pultruded composites," "pultrusions," "pultruded members" or similar generally encompass reinforced materials (e.g. fibers or woven or braided strands) that are impregnated with a resin and pulled through a heated stationary die such that the resin cures or undergoes polymerization. As such, the process of manufacturing pultruded composites is typically characterized by a continuous process of composite materials that produces composite parts having a constant cross-section. Accordingly, the pultruded composites can eliminate various concerns and challenges associated with using dry fabric alone.

Accordingly, the art is continuously seeking new and improved methods of manufacturing rotor blade components, such as the spar caps, using pultrusions. More specifically, methods of manufacturing rotor blade components using pultruded members constructed of different fiber materials (e.g. glass and carbon fibers) would be advantageous.

Various aspects and advantages of the invention will be set forth in part in the following description, or may be clear from the description, or may be learned through practice of the invention.

In one aspect of the present disclosure, a method of manufacturing a rotor blade component of a wind turbine is disclosed. The method includes providing a plurality of pultruded members. Each of the pultruded members includes, at least, first and second fiber materials, wherein the first and second fiber materials include at least one of different sizes or different types of fiber materials. Thus, the fiber type and/or size may be varied according to the desired strength, stiffness, mass, and/or cost of the rotor blade component. Another step includes arranging the plurality of pultruded members into one or more layers. A further step includes joining the layers of pultruded members together to form the rotor blade component.

In certain embodiments, the rotor blade component includes a spar cap, a shear web, a bond cap, a root ring, or any other suitable rotor blade component.

In another embodiment, the step of arranging the plurality of pultruded members into one or more layers further includes arranging the plurality of pultruded members in a mold for a rotor blade component in a predetermined pattern. The method may also include tailoring the predetermined pattern based on at least one of a desired strength, stiffness, mass, or cost of the rotor blade component.

In further embodiments, the step of joining the layers of pultruded members together may include at least one of vacuum infusing the layers together or bonding the layers together. More specifically, in certain embodiments, the layers may be bonded together via at least one of an adhesive, a pre-preg material, a semi-preg material, or similar.

In additional embodiments, the first and second fiber materials may include glass fibers having any suitable modulus or strength, carbon fibers having any suitable modulus or strength, or any other suitable fiber material known in the art. In addition, the first and second fiber materials may have any suitable size and/or shape. For example, in certain embodiments, the first and second fiber materials may be the same fiber material, but may have varying diameters. In further embodiments, the resin material may include any suitable resin, including but not limited to polyester, polyurethane, polybutylene terephthalate (PBT), polyethylene terephthalate (PET), vinyl ester, epoxy, or similar, or combinations thereof.

In another aspect, the present disclosure is directed to a method of manufacturing a rotor blade component of a wind turbine. The method includes providing a plurality of pultruded members, wherein at least one of the pultruded members includes at least two different types of fibers. The method also includes arranging the plurality of pultruded members into a mold of a rotor blade component. Another step includes joining the pultruded members together to form the rotor blade component. It should be understood that the method may include any of the additional features and/or steps as described herein.

In yet another aspect, the present disclosure is directed to a rotor blade of a wind turbine. The rotor blade includes a blade root and a blade tip, leading and trailing edges, suction and pressure sides, and at least one structural component. The structural component includes a plurality of pultruded members arranged in one or more layers. Further, each of the pultruded members is constructed of at least first and second fiber materials. For example, in one embodiment, the first and second fiber materials include different types of material. Alternatively, the first and second fiber may be the same material, but may have different sizes or diameters.

In various embodiments, the structural component may include a spar cap, a shear web, a bond cap, a root ring, or any other suitable rotor blade component. In addition, it should be understood that the rotor blade may include any of the additional features as described herein.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 illustrates a perspective view of one embodiment of a wind turbine according to the present disclosure;
FIG. 2 illustrates a perspective view of one of the rotor blades of FIG. 1;
FIG. 3 illustrates a cross-sectional view of the rotor blade of FIG. 2 along line 3-3;
FIG. 4 illustrates a cross-sectional view of one embodiment of a pultruded spar cap according to the present disclosure;
FIG. 5 illustrates a cross-sectional view of one of the pultruded members of the spar cap of FIG. 4;
FIG. 6 illustrates a cross-sectional view of one embodiment of a pultruded member according to the present disclosure;
FIG. 7 illustrates a cross-sectional view of another embodiment of a pultruded member according to the present disclosure;
FIG. 8 illustrates a cross-sectional view of yet another embodiment of a pultruded member according to the present disclosure;
FIG. 9 illustrates a cross-sectional view of one embodiment of a pultruded spar cap according to the present disclosure; and
FIG. 10 illustrates a flow diagram of a method of manufacturing rotor blade components according to the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Generally, the present subject matter is directed to manufacturing rotor blade components for a wind turbine using pultruded members constructed of multiple fiber materials. More specifically, in one embodiment, the rotor blade components are constructed of a plurality of pultruded members or plates, wherein the plates are comprised of a mixture or hybrid of different materials (e.g. glass and carbon fibers) and resin. Thus, the pre-cured, prefabricated (e.g. pultruded) members can be arranged and joined together to form various rotor blade components of different sizes and shapes having customizable mechanical and/or physical properties. More specifically, the rotor blade components as described herein can be tailored with specific mechanical properties due to the varying materials of the individual plates or members.

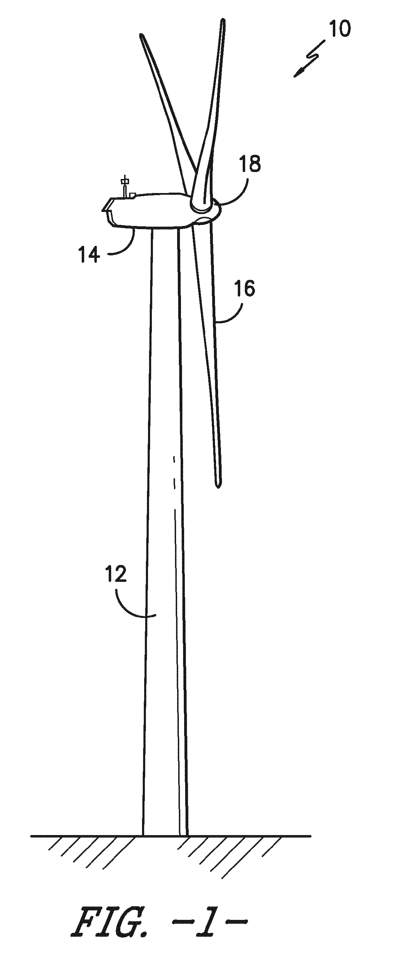

The present disclosure provides many advantages not present in the prior art. For example, as mentioned, the properties of the rotor blade components of the present disclosure can be customized via the different materials of the plates or members. Further, the rotor blade components can be manufactured with more flexibility over prior art methods. In addition, the rotor blade components are less prone to defects and have known material properties. Further, since the rotor blade components are pre-cured, wrinkling and dis-bonding of the layers are reduced and/or eliminated. Referring now to the drawings, FIG. 1 illustrates a perspective view of a horizontal axis wind turbine 10. It should be appreciated that the wind turbine 10 may also be a vertical-axis wind turbine. As shown in the illustrated embodiment, the wind turbine 10 includes a tower 12, a nacelle 14 mounted on the tower 12, and a rotor hub 18 that is coupled to the nacelle 14. The tower 12 may be fabricated from tubular steel or other suitable material. The rotor hub 18 includes one or more rotor blades 16 coupled to and extending radially outward from the hub 18. As shown, the rotor hub 18 includes three rotor blades 16. However, in an alternative embodiment, the rotor hub 18 may include more or less than three rotor blades 16. The rotor blades 16 rotate the rotor hub 18 to enable kinetic energy to be transferred from the wind into usable mechanical energy, and subsequently, electrical energy. Specifically, the hub 18 may be rotatably coupled to an electric generator (not illustrated) positioned within the nacelle 14 for production of electrical energy.

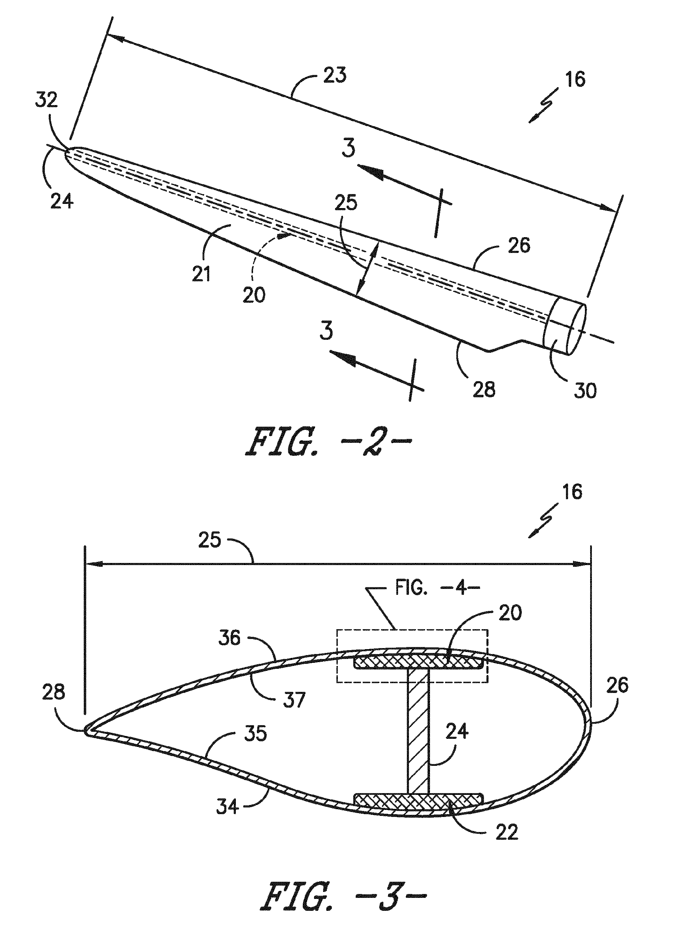

Referring to FIGS. 2 and 3, one of the rotor blades 16 of FIG. 1 is illustrated in accordance with aspects of the present subject matter. In particular, FIG. 2 illustrates a perspective view of the rotor blade 16, whereas FIG. 3 illustrates a cross-sectional view of the rotor blade 16 along the sectional line 3-3 shown in FIG. 2. As shown, the rotor blade 16 generally includes a blade root 30 configured to be mounted or otherwise secured to the hub 18 (FIG. 1) of the wind turbine 10 and a blade tip 32 disposed opposite the blade root 30. A body shell 21 of the rotor blade generally extends between the blade root 30 and the blade tip 32 along a longitudinal axis 27. The body shell 21 may generally serve as the outer casing/covering of the rotor blade 16 and may define a substantially aerodynamic profile, such as by defining a symmetrical or cambered airfoil-shaped cross-section. The body shell 21 may also define a pressure side 34 and a suction side 36 extending between leading and trailing ends 26, 28 of the rotor blade 16. Further, the rotor blade 16 may also have a span 23 defining the total length between the blade root 30 and the blade tip 32 and a chord 25 defining the total length between the leading edge 26 and the trialing edge 28. As is generally understood, the chord 25 may generally vary in length with respect to the span 23 as the rotor blade 16 extends from the blade root 30 to the blade tip 32.

In several embodiments, the body shell 21 of the rotor blade 16 may be formed as a single, unitary component. Alternatively, the body shell 21 may be formed from a plurality of shell components. For example, the body shell 21 may be manufactured from a first shell half generally defining the pressure side 34 of the rotor blade 16 and a second shell half generally defining the suction side 36 of the rotor blade 16, with such shell halves being secured to one another at the leading and trailing ends 26, 28 of the blade 16. Additionally, the body shell 21 may generally be formed from any suitable material. For instance, in one embodiment, the body shell 21 may be formed entirely from a laminate composite material, such as a carbon fiber reinforced laminate composite or a glass fiber reinforced laminate composite. Alternatively, one or more portions of the body shell 21 may be configured as a layered construction and may include a core material, formed from a lightweight material such as wood (e.g., balsa), foam (e.g., extruded polystyrene foam) or a combination of such materials, disposed between layers of laminate composite material.

Referring particularly to FIG. 3, the rotor blade 16 may also include one or more longitudinally extending structural components configured to provide increased stiffness, buckling resistance and/or strength to the rotor blade 16. For example, the rotor blade 16 may include a pair of longitudinally extending spar caps 20, 22 configured to be engaged against the opposing inner surfaces 35, 37 of the pressure and suction sides 34, 36 of the rotor blade 16, respectively. Additionally, one or more shear webs 24 may be disposed between the spar caps 20, 22 so as to form a beam-like configuration. The spar caps 20, 22 may generally be designed to control the bending stresses and/or other loads acting on the rotor blade 16 in a generally spanwise direction (a direction parallel to the span 23 of the rotor blade 16) during operation of a wind turbine 10. Similarly, the spar caps 20, 22 may also be designed to withstand the spanwise compression occurring during operation of the wind turbine 10.

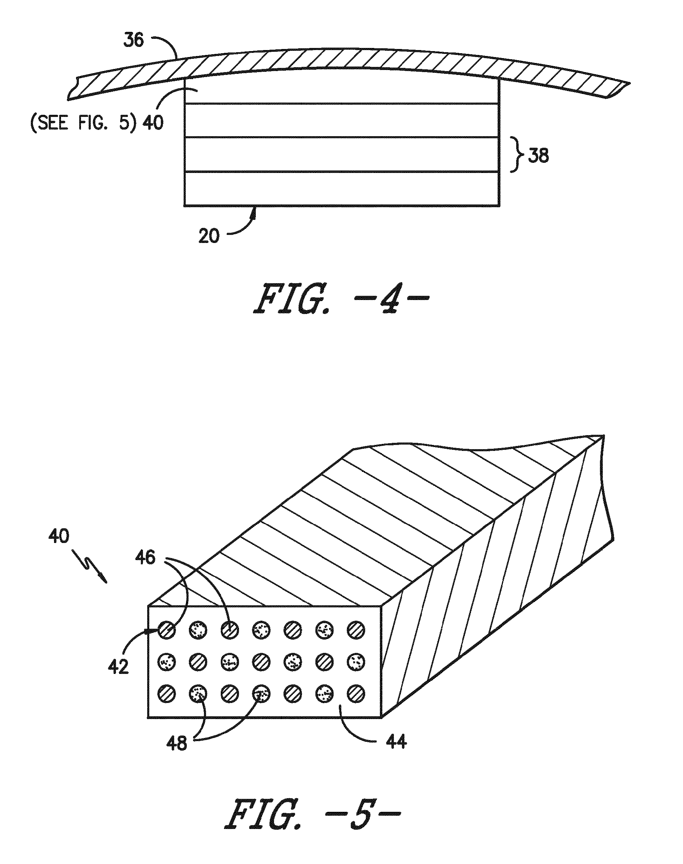

Referring now to FIG. 4, a cross-sectional view of a spar cap 20 constructed of a plurality of pultruded members 40 or plates arranged in layers 38 according to the present disclosure is illustrated. In addition, FIG. 5 illustrates a detailed, cross-sectional view of one of the pultruded members 40 of FIG. 4. During the manufacturing process, one or more fiber materials 42 are cured to form the individual pultruded members 40. For example, in certain embodiments, the fibers 42 may be impregnated with at least one resin material 44 using any suitable means. In particular embodiments, the resin material 44 may include any suitable resin, including but not limited to polyester, polyurethane, polybutylene terephthalate (PBT), polyethylene terephthalate (PET), vinyl ester, epoxy, or similar. The impregnated fibers 42 may then be cured to form the pultruded members 40. The plurality of pultruded members 40 each comprising different materials may then be joined together to form the spar cap 20.

For example, as shown in the illustrated embodiment of FIG. 4, each of the pultruded members 40 may form a single layer 38. The layers 38 may then be stacked atop one another and joined together using any suitable means, for example, by vacuum infusing the members together or by bonding the members together via an adhesive, a semi-preg material, or a pre-preg material. It should be understood that the arrangement of the pultruded members 40 as shown in FIG. 4 is given for illustrative purposes only and is not meant to be limiting. For example, in further embodiments, the spar cap 20 may be constructed of a single pultruded member 40. Alternatively, the spar cap 20 may be constructed of multiple layers 38, with each layer containing multiple pultruded members 40.

Referring to FIG. 5, the fibers 42 of the pultruded members 40 may include different or varying materials cured together with the resin material 44. More specifically, as shown, the pultruded member 40 may include, at least, a first fiber material 46 and a different, second fiber material 48 arranged in a certain pattern. In various embodiments, the first and second fiber materials 46, 48 may include glass fibers, carbon fibers, or any other suitable fiber material.

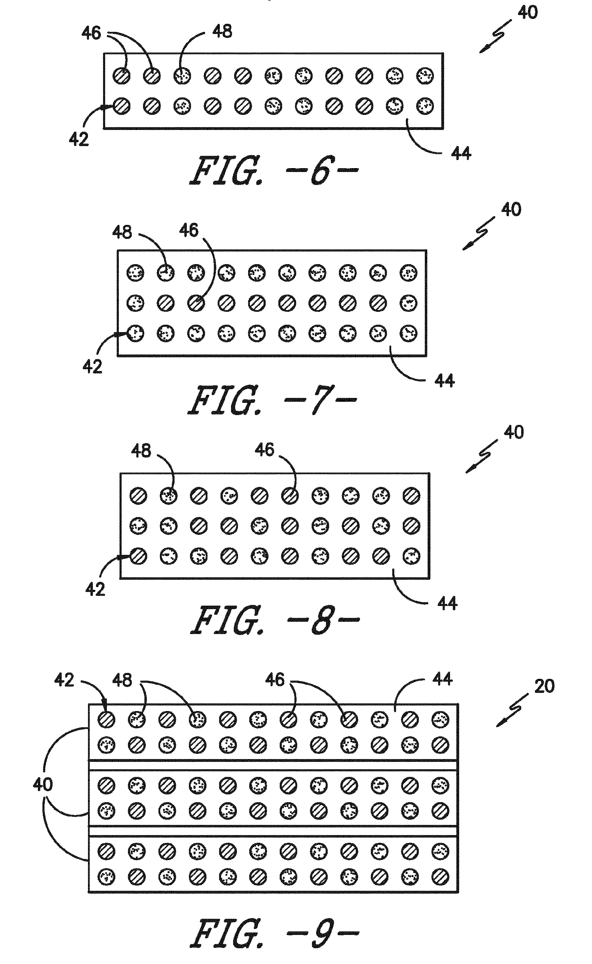

Referring now to FIGS. 6-8, further embodiments of pultruded members 40 for use in constructing rotor blade components (e.g., spar caps) according to the present disclosure are illustrated. For example, FIG. 6 illustrates one embodiment of a pultruded member 40 or plate constructed of different or varying fiber materials 46, 48 according to the present disclosure. Further, FIGS. 7 and 8 illustrate additional embodiments of a pultruded member 40 constructed of different fiber materials 46, 48 according to the present disclosure. More specifically, as shown generally in FIGS. 6-8, the pultruded members 40 include a first fiber material 46 and a second fiber material 48 cured together with a resin material 44. For example, in one embodiment, the pultruded members 40 can be manufactured using a number of spools of fibers that are fed through the resin material 44 and then through a heated die to be formed into the pultruded members 40. Thus, more than one type of fiber material can be pultruded through the same die simultaneously. As such, in certain embodiments, the different fiber material types can be arranged such that the different fibers are segregated into the die, mixed randomly, or arranged in any specific pattern such that the completed part has desired mechanical and physical properties. Alternatively, in further embodiments, the first and second fiber materials may be the same material, but may have different sizes or diameters so as to improve the manufacturing process without changing mechanical properties of the pultrusions.

For example, as shown in FIG. 6, the type of fiber material changes with every two fibers 42. Alternatively, as shown in FIG. 7, the inner fibers 42 vary with respective to the outer fibers 42. Such an embodiment may be beneficial to provide a rotor blade component requiring certain strength properties at an economical cost, as the inner fibers 42 may provide the desired strength and the outer fibers 42 may be provided at a lower cost. In still further embodiments, as shown in FIG. 8, the pultruded members 40 may be constructed with a random pattern of first and second fiber materials 46, 48. It should also be understood that though the illustrated embodiments illustrate two different composite materials 46, 48, further embodiments of the pultruded member 40 may be customized to include any number of different types of materials in any suitable pattern in addition to those illustrated in the drawings. Accordingly, the rotor blade components as described herein may be customized using any suitable arrangement and/or combination of pultruded members 40 such that the component has the desired mechanical and/or physical properties required for the part.

Referring now to FIG. 9, a plurality of the pultruded members 40 of the present disclosure may be joined together to form a rotor blade component. For example, as shown, the pultruded members 40 may be arranged into one or more layers 38 and joined together via vacuum infusion or bonding via an adhesive, a semi-preg material, or a pre-preg material. More specifically, as shown in the illustrated embodiment, each of the pultruded members 40 may make up the entire thickness of each layer 38 of the spar cap 20. Alternatively, each of the layers 38 may include a plurality of the pultruded members 40.

It should also be understood that the pultruded members 40 as described herein may be used to construct various other rotor blade components, in addition to the spar cap 20. For example, in certain embodiments, the pultruded members 40 may be used to construct the shear web 24, a root ring, a bond cap, or any other rotor blade component that can benefit from being constructed of a pultruded parts as described herein.

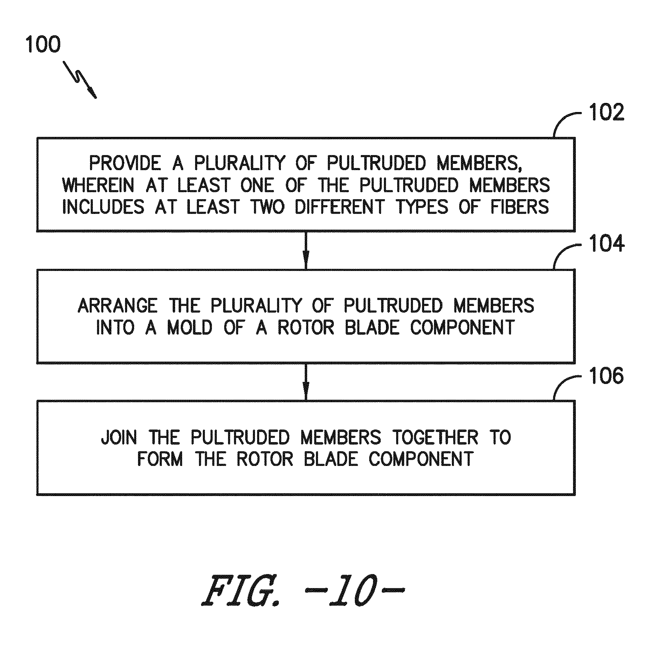

The present disclosure is also directed to methods for manufacturing rotor blade components as described herein. For example, as shown in FIG. 10, a flow diagram of a method 100 of manufacturing a rotor blade component of a wind turbine is disclosed. At 102, the method 100 includes providing a plurality of pultruded members, wherein at least one of the pultruded members includes at least two different types of fibers. Another step 104 includes arranging the plurality of pultruded members into a mold of a rotor blade component. The method 100 also includes joining the pultruded members together to form the rotor blade component (step 106).

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A method of manufacturing a rotor blade component of a wind turbine, the method comprising:
   providing a plurality of pultruded members, each of the pultruded members comprising at least first and second fiber materials, wherein the first and second fiber materials comprise at least one of different sizes or different types of fiber materials; arranging the plurality of pultruded members into one or more layers; and
   joining the layers of pultruded members together to form the rotor blade component.
2. The method of clause 1, wherein the rotor blade component comprises at least one of a spar cap, a shear web, a bond cap, or a root ring.
3. The method of clause 1 or clause 2, wherein arranging the plurality of pultruded members into one or more layers further comprises arranging the plurality of pultruded members in a mold for a rotor blade component in a predetermined pattern.
4. The method of any preceding clause, further comprising tailoring the predetermined pattern based on at least one of a desired strength, stiffness, mass, or cost of the rotor blade component.
5. The method of any preceding clause, wherein joining the layers of pultruded members together further comprises at least one of vacuum infusing the layers together or bonding the layers together.
6. The method of any preceding clause, wherein the layers are bonded together via at least one of an adhesive, a pre-preg material, or a semi-preg material.
7. The method of any preceding clause, wherein the first and second fiber materials comprise at least one of glass fibers or carbon fibers.
8. The method of any preceding clause, wherein the at least one resin material further comprises at least one of polyester, polyurethane, polybutylene terephthalate (PBT), polyethylene terephthalate (PET), vinyl ester, or epoxy.
9. A method of manufacturing a rotor blade component of a wind turbine, the method comprising:
   providing a plurality of pultruded members, at least one of the pultruded members comprising at least two different types of fibers;
   arranging the plurality of pultruded members into a mold of a rotor blade component; and
   joining the pultruded members together to form the rotor blade component.
10. The method of any preceding clause, wherein the rotor blade component comprises at least one of a spar cap, a shear web, a bond cap, or a root ring.
11. The method of any preceding clause, wherein arranging the plurality of pultruded members into the mold further comprises arranging the plurality of pultruded members in a predetermined pattern.
12. The method of any preceding clause, further comprising tailoring the predetermined pattern based on at least one of a desired strength, stiffness, mass, or cost of the rotor blade component.
13. The method of any preceding clause, wherein joining the pultruded members together further comprises at least one of vacuum infusing the layers together or bonding the layers together.
14. The method of any preceding clause, wherein the pultruded members are bonded together via at least one of an adhesive, a pre-preg material, or a semi-preg material.
15. The method of any preceding clause, wherein the different types of fiber materials comprise at least one of glass fibers or carbon fibers.
16. The method of any preceding clause, wherein the at least one resin material further comprises at least one of polyester, polyurethane, polybutylene terephthalate (PBT), polyethylene terephthalate (PET), vinyl ester, or epoxy.
17. A rotor blade of a wind turbine, the rotor blade comprising:
   a blade root and a blade tip;
   a leading edge and a trailing edge;
   a suction side and a pressure side; and,
   at least one structural component comprising a plurality of pultruded members arranged in one or more layers, each of the pultruded members constructed of a plurality of fiber materials joined together via a cured resin material, the plurality of fiber materials comprising at least first and second fiber materials, wherein the first and second fiber materials comprise at least one of different sizes or different types of fiber materials.
18. The rotor blade of any preceding clause, wherein the structural component comprises at least one of a spar cap, a shear web, a bond cap, or a root ring.
19. The rotor blade of any preceding clause, wherein the layers are joined together by at least one of vacuum infusion, an adhesive, a pre-preg material, or a semi-preg material.
20. The rotor blade of any preceding clause, wherein the pultruded members are arranged in a predetermined pattern based on at least one of a desired strength, stiffness, mass, or cost of the rotor blade component.

## Claims

1. A method (100) of manufacturing a rotor blade component of a wind turbine (10), the method comprising:
providing (102) a plurality of pultruded members (40), each of the pultruded members (40) comprising at least first and second fiber materials (46, 48), wherein the first and second fiber materials (46, 48) comprise at least one of different sizes or different types of fiber materials (42);
arranging (104) the plurality of pultruded members (40) into one or more layers (38); and
joining (106) the layers (38) of pultruded members (40) together to form the rotor blade component.

2. The method (100) of claim 1, wherein the rotor blade component comprises at least one of a spar cap, a shear web, a bond cap, or a root ring.

3. The method (100) of any preceding claim, wherein arranging the plurality of pultruded members (40) into one or more layers (38) further comprises arranging the plurality of pultruded members (40) in a mold for a rotor blade component in a predetermined pattern.

4. The method (100) of claim 3, further comprising tailoring the predetermined pattern based on at least one of a desired strength, stiffness, mass, or cost of the rotor blade component.

5. The method (100) of any preceding claim, wherein joining the layers (38) of pultruded members (40) together further comprises at least one of vacuum infusing the layers (38) together or bonding the layers (38) together.

6. The method (100) of claim 5, wherein the layers (38) are bonded together via at least one of an adhesive, a pre-preg material, or a semi-preg material.

7. The method (100) of any preceding claim, wherein the first and second fiber materials (46, 48) comprise at least one of glass fibers or carbon fibers.

8. The method (100) of any preceding claim, wherein the at least one resin material (44) further comprises at least one of polyester, polyurethane, polybutylene terephthalate (PBT), polyethylene terephthalate (PET), vinyl ester, or epoxy.

9. A method of manufacturing a rotor blade component of a wind turbine (10), the method comprising:
providing (102) a plurality of pultruded members (40), at least one of the pultruded members (40) comprising at least two different types of fibers (42);
arranging (104) the plurality of pultruded members (40) into a mold of a rotor blade component; and
joining (106) the pultruded members (40) together to form the rotor blade component.

10. The method (100) of claim 9, wherein the rotor blade component comprises at least one of a spar cap, a shear web, a bond cap, or a root ring.

11. The method (100) of claim 9 or claim 10, wherein arranging the plurality of pultruded members (40) into the mold further comprises arranging the plurality of pultruded members (40) in a predetermined pattern.

12. The method (100) of any of claims 9 to 11, wherein joining the pultruded members (40) together further comprises at least one of vacuum infusing the layers (38) together or bonding the layers (38) together.

13. The method (100) of claim 12, wherein the pultruded members (40) are bonded together via at least one of an adhesive, a pre-preg material, or a semi-preg material.

14. The method (100) of any of claims 9 to 13, wherein the different types of fiber materials comprise at least one of glass fibers or carbon fibers.

15. A rotor blade (16) of a wind turbine (10), the rotor blade (16) comprising:
a blade root (30) and a blade tip (32);
a leading edge (26) and a trailing edge (28);
a suction side (36) and a pressure side (34); and
at least one structural component comprising a plurality of pultruded members (40) arranged in one or more layers (38), each of the pultruded members (40) constructed of a plurality of fiber materials (42) joined together via a cured resin material (44), the plurality of fiber materials (42) comprising at least first and second fiber materials (46, 48), wherein the first and second fiber materials (46, 48) comprise at least one of different sizes or different types of fiber materials.
